(19) Europäisches Patentamt

European Patent Office

Office européen des brevets

(11) **EP 4 718 387 A1**

(12) **EUROPEAN PATENT APPLICATION**

(43) Date of publication:
**01.04.2026 Bulletin 2026/14**

(21) Application number: **24203520.2**

(22) Date of filing: **30.09.2024**

(51) International Patent Classification (IPC):
*G06V 10/44* (2022.01)   *G01S 7/41* (2006.01)
*G01S 13/931* (2020.01)   *G06V 10/62* (2022.01)
*G06V 10/75* (2022.01)   *G06V 10/82* (2022.01)
*G06V 20/56* (2022.01)   *G06V 20/64* (2022.01)
*G06V 10/46* (2022.01)

(52) Cooperative Patent Classification (CPC):
**G06V 20/56; G01S 7/417; G01S 13/931;
G06V 10/454; G06V 10/462; G06V 10/62;
G06V 10/757; G06V 10/82; G06V 20/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Aptiv Technologies AG
8200 Schaffhausen (CH)**

(72) Inventors:
• **LABUSCH, Sven**
  **50737 Köln (DE)**
• **KURIAN, Jittu**
  **42553 Velbert (DE)**
• **WEFELSCHEID, Cornelius**
  **45133 Essen (DE)**
• **MEUTER, Mirko**
  **40699 Erkrath (DE)**

(74) Representative: **Manitz Finsterwald
Patent- und Rechtsanwaltspartnerschaft mbB
Martin-Greif-Straße 1
80336 München (DE)**

(54) **METHODS AND SYSTEMS FOR KEYPOINT DETECTION AND EGO POSITION ESTIMATION OF A VEHICLE**

(57)   A computer implemented method for keypoint detection based on radar sensor data may include the following steps carried out by computer hardware components: acquiring radar sensor data from a radar sensor; determining a feature representation based on the radar sensor data; determining a repeatability score and a descriptiveness score based on the feature representation; and detecting at least one keypoint based on the repeatability score and the descriptiveness score.

EP 4 718 387 A1

## Description

FIELD

The present disclosure relates to methods and systems for keypoint detection and ego position estimation of a vehicle.

BACKGROUND

Keypoint detection and ego position estimation of a vehicle are essential prerequisite for various tasks, in particular in autonomously driving vehicles. Both, camera-based systems and radar-based systems can be used for this kind of tasks. One or more driver assist functions of the vehicle can be enabled, for example in an automatic driving application, based on keypoint detection and ego position estimation of the vehicle.

Accordingly, there is a need to provide an efficient and reliable keypoint detection and ego position estimation.

SUMMARY

The present disclosure provides a computer implemented method for keypoint detection based on radar sensor data, a computer implemented method for estimating an ego position of a vehicle based on the detected keypoints, a radar perception system and a non-transitory computer readable medium according to the independent claims. Embodiments are given in the subclaims, the description and the drawings.

In one aspect, the present disclosure is directed at a computer implemented method for keypoint detection based on radar sensor data, wherein the method comprises the following steps performed (in other words: carried out) by computer hardware components: acquiring radar sensor data from a radar sensor; determining a feature representation based on the radar sensor data; determining a repeatability score and a descriptiveness score based on the feature representation; and detecting at least one keypoint based on the repeatability score and the descriptiveness score.

In other words, at least one keypoint may be detected or determined based on radar sensor data from a radar sensor. The at least one keypoint may be a landmark or a similar point of interest in an environment of the vehicle. The radar sensor may be mounted on the vehicle. The radar sensor may be a series or standard radar sensor, typically used in vehicles. In particular, the radar sensor may not be a 360° rotating radar sensor. The radar sensor may receive the radar sensor data as electromagnetic signals reflected from objects in an environment of the vehicle. The environment of the vehicle may be represented using a grid including a plurality of cells, wherein an object may be detected within a cell of the grid based on the radar sensor data.

The radar sensor data may be received by the radar sensor in a frame. The frame may be a group of data which is captured in a short period of time, and aggregated together to create a snapshot representing a single moment in time or a present point of time. Thus, keypoints determined in a frame may be keypoints determined at a single moment of time or at a present point of time.

A feature representation may be determined based on the radar sensor data. The feature representation may be determined using a neural network configured to process the radar sensor data. Therefore, a radar backbone neural network may be used for determining the feature representation. Features of the feature representation may be learned during a training phase of the neural network. The features may be suitable for estimating keypoints based on the radar sensor data.

The at least one keypoint may be determined based on a repeatability score and a descriptiveness score. The repeatability score may indicate how likely it is that the keypoint can be determined in a different frame, i.e. at another point of time than the present point of time. For example, if a keypoint is determined in a current frame and the keypoint is also determined in a subsequent frame, the repeatability score may be high, e.g. the repeatability score may be equal to 1. The descriptiveness score may indicate how descriptive a descriptor feature is. Thus, the descriptiveness score may provide a quality information about the descriptiveness of the descriptor feature. The descriptor feature may be a learned, unique identifier in a predefined region of the vehicle, for example, around a vehicle in a predefined distance.

The at least one keypoint may be selected from a plurality of detected keypoints, wherein the selected keypoint may be a keypoint having a high repeatability score and a high descriptiveness score. Therefore, the selected keypoint may be detectable in different frames at different points of time, and the selected keypoint may be distinguishable from other keypoints.

According to an embodiment, the feature representation is determined using a neural network, in particular a Recurrent Neural Network, RNN. The repeatability score and the descriptiveness score are each determined using a respective further neural network. The neural networks may be unsupervised trained neural networks, wherein the neural networks may be trained end-2-end. The neural networks for determining the repeatability score and the descriptiveness score may be trained together with a training of the neural network for determining the feature representation.

An unsupervised training of the neural networks described herein may not requiring labelling of the data. The unsupervised setup may also help to learn abstract descriptor vectors or descriptor features for recognizing the keypoints in different frames at different points of time.

According to an embodiment, the method further comprises the following steps carried out by the computer hardware components: determining descriptor features based on the feature representation; and assigning the detected keypoints based on the descriptor features. The descriptor features may be used to assign keypoints detected in consecutive frames or even on completely different days.

According to an embodiment, the method further comprises the following step carried out by the computer hardware components: refining a keypoint position using a direct offset regression. The keypoint position may therefore not only be determined with grid accuracy, but also within a cell of the grid.

According to an embodiment, the method further comprises the following step carried out by the computer hardware components: matching a keypoint position of the at least one keypoint in a cell of a current frame to a keypoint position of the at least one keypoint in a corresponding cell of a previous frame. The current frame may include radar sensor data at a present point of time. The previous frame may include radar sensor data at a previous point of time. The matching of the keypoint position of the at least one keypoint in the cell of the current frame to the keypoint position of the at least one keypoint in the corresponding cell of the previous frame may enforce the repeatability score to indicate a repeatable keypoint more precisely.

According to an embodiment, the method further comprises the following step carried out by the computer hardware components: matching a cosine similarity of the descriptor features of the at least one keypoint in a cell of a current frame to a cosine similarity of the descriptor features of the at least one keypoint in a corresponding cell of a previous frame. As described above, the current frame may include radar sensor data at a present point of time and the previous frame may include radar sensor data at a previous point of time. The matching of the cosine similarity of the descriptor features of the at least one keypoint in the cell of the current frame to the cosine similarity of the descriptor features of the at least one keypoint in the corresponding cell of the previous frame may enforce the descriptiveness score to indicate a reliable or descriptive keypoint more precisely.

In another aspect, the present disclosure is directed at a computer implemented method for estimating an ego position of a vehicle based on the detected keypoints according to the methods for keypoint detection as described herein, wherein the method comprises the following steps carried out by computer hardware components: transforming the at least one detected keypoint at a present point of time from a local vehicle coordinate system to a global world coordinate system; storing the at least one transformed keypoint in a global map; determining at least one refined keypoint at a present point of time based on the at least one transformed keypoint at the present point of time and the at least one stored keypoint at a previous point of time; and determining an ego position of the vehicle based on the at least one refined keypoint at the present point of time and the at least one detected keypoint at the present point of time.

In other words, an ego position estimation of the vehicle may be based on the detected keypoints at a present point of time and corresponding keypoints at previous point of time that are stored in the global map. The corresponding keypoints at previous points of time are updated or refined by the detected keypoints at the present point of time. Thus, the ego position estimation of the vehicle and the refinement of the keypoints position may be performed (in other words: carried out) at the same time. The global map may be a map in the global world coordinate system.

The ego position of the vehicle can be estimated by solving a non-linear system of equations. In particular, the ego position of the vehicle may be estimated using a SLAM (Simultaneous Localization and Mapping) algorithm. The SLAM algorithm may include an assignment or a clustering of the keypoints over time. GPS data of a GPS sensor may be integrated into the SLAM algorithm to further increase an accuracy of the vehicle's ego position.

According to an embodiment, the method further comprises the following steps carried out by the computer hardware components: determining a position of the vehicle in the global world coordinate system based on GPS data of a GPS sensor; determining a section of the global map based on the GPS data of the GPS sensor, wherein the section of the global map comprises the position of the vehicle in the global world coordinate system; and refining the position of the vehicle based on the determined ego position of the vehicle.

The position of the vehicle in the global world coordinate system may be a rough position based on the data of the GPS sensor. The rough position of the vehicle based on the GPS data may be accurate to within a few meters, for example up to 7 meters. The position of the vehicle may also include an orientation of the vehicle in the global world coordinate system.

According to an embodiment, the method further comprises the following step carried out by the computer hardware components: storing the at least one refined keypoint in the global map. Thus, the stored refined keypoint may be used for further refinements of the keypoint in further points of time, wherein the further points of time may be after the present point of time, in particular immediately after the present point of time.

According to an embodiment, determining the ego position of the vehicle is further based on a score, the score being a product of the repeatability score and the descriptiveness score.

According to an embodiment, determining the refined keypoint at the present point of time is based on averaging a descriptor feature of the at least one keypoint at the present point of time and a descriptor feature of the at least one keypoint at the previous point of time. The refined keypoint may therefore include a descriptor feature based on a combination of the descriptor feature of the at least one keypoint at the present point of time and the descriptor feature of the at least one keypoint at the previous point of time. Alternatively, the descriptor feature of the refined keypoint may be the descriptor feature of the at least one keypoint at the present point of time or the descriptor feature of the at least one keypoint at the previous point of time, whichever fits better.

According to an embodiment, determining the refined keypoint at a present point of time is based on averaging a keypoint position of the at least one keypoint at the present point of time and a keypoint position of the at least one keypoint at a previous point of time. The refined keypoint may therefore have a refined keypoint position based on a combination of the keypoint position of the at least one keypoint at the present point of time and the keypoint position of the at least one keypoint at the previous point of time. Alternatively, the keypoint position of the refined keypoint may be the keypoint position of the at least one keypoint at the present point of time or the keypoint position of the at least one keypoint at the previous point of time, whichever fits better.

In another aspect, the present disclosure is directed at a radar perception system, said radar perception system being configured to carry out several or all steps of the computer implemented methods described herein. The radar perception system can be part of a vehicle.

The radar perception system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented methods in the radar perception system. The non-transitory data storage and/or the memory unit may comprise a computer program for instructing a computer of the radar perception system to perform several or all steps or aspects of the computer implemented methods described herein, for example using the processing unit and the at least one memory unit.

In another aspect, the present disclosure may be directed to a vehicle, comprising the radar perception system described herein and the radar sensor, wherein the at least one keypoint is detected based on an output of the radar sensor. The output of the radar sensor may be the radar data that is used for detecting the at least one keypoint. It will be understood that the vehicle may comprise further radar sensors and the at least one keypoint may be detected on radar data of the further radar sensors.

In another aspect, the present disclosure is directed at a non-transitory computer readable medium comprising instructions for carrying out several or all steps or aspects of the computer implemented methods described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented methods described herein.

It is understood that features described in connection with the methods can be realized in the radar perception system as well as the non-transitory computer readable medium and vice versa.

DRAWINGS

Exemplary embodiments and functions of the present disclosure are described herein in conjunction with the following drawings, showing schematically:

Fig. 1    an overview of detecting keypoints based on radar sensor data according to various embodiments;

Fig. 2    a flow diagram illustrating a method for keypoint detection based on radar sensor data according to various embodiments;

Fig. 3    a flow diagram illustrating a method for estimating an ego position of a vehicle based on the detected keypoints according to various embodiments; and

Fig. 4    a radar perception system with a plurality of computer hardware components configured to carry out steps of a computer implemented method for keypoint detection and ego trajectory estimation of a vehicle to various embodiments.

DETAILED DESCRIPTION

When it comes to autonomous driving and advanced safety it is quite important to localize the ego vehicle in the world. One first step to do so is detecting high quality keypoints. A keypoint may represent a landmark in an environment of a vehicle. Those keypoints can then be stored in a global map, to use them later for re-localization based on that previously generated map.

Typically, camera-based systems can be used to recognize keypoints in the environment of the vehicle. Neural networks may, for example, estimate keypoints in camera images. However, camera systems are not the only sensor setups which are suitable for this kind of tasks. Radar sensors are also widely used in automotive industries as another sensor type in comparison to a camera with different physical properties which ensures a redundancy and additional possibilities for object perception which is crucial for advanced safety and autonomous driving. A 360° rotating radar sensor may be used to detect keypoints in the environment of the vehicle which requires less software-based attention to radar specifics like sparse data. On the other hand, a radar perception system including series production radar sensors, as described herein, may also be used to detect keypoints in the vehicle's surroundings and to determine the vehicle's ego position.

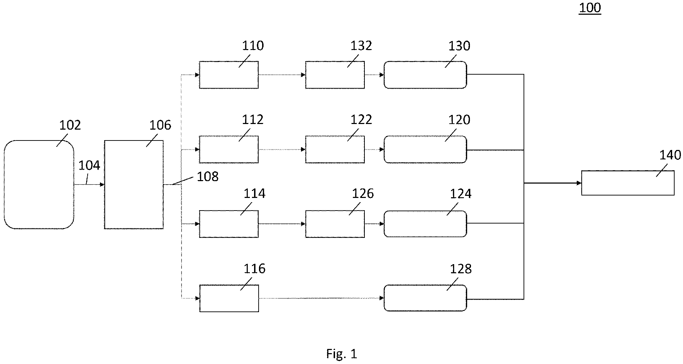

Also, the radar perception system may use neural networks to detect or to determine the keypoints. A general overview 100 of detecting keypoints 140 based on radar sensor data is shown in Fig. 1. Machine learning techniques may be used to detect the keypoints 140 based on automotive radar sensor data 104 acquired from a radar sensor 102. The radar sensor 102 may transmit and receive radar sensor data 104 in frames, wherein a frame may describe a group of radar sensor data 104 that is captured in a short period of time, and aggregated together to create a snapshot representing a single moment in time.

A radar backbone neural network 106 may be used to process (in other words: carry out) the radar sensor data 104 and to determine an intermediate feature representation 108 where context is already aggregated. The feature representation 108 may be determined using a Recurrent Neural Network (RNN). Additionally to the radar backbone neural network 106, further neural networks 110, 112, 114, 116 may be used to determine the keypoints 140.

The further neural networks 110, 112, 114, 116 may include a neural network 110 for determining a keypoint position 130, a neural network 112 for determining a repeatability score 120, a neural network 114 for determining a descriptiveness score 124, and a neural network 116 for determining descriptor features 128. The radar backbone neural network 106 and the further neural networks 110, 112, 114, 116, in particular the neural network 110 for determining the keypoint position 130, the neural network 112 for determining the repeatability score 120, the neural network 114 for determining the descriptiveness score 124, and the neural network 116 for determining the descriptor features 128 may be trained end-to-end. Thus, the neural network 106 for determining the feature representation 108 and the further neural networks 110, 112, 114, 116, that may be additional heads to the radar backbone neural network 106, may be trained together. This may enable an operation in the overall radar perception system as described herein with less computational overhead.

In particular, an unsupervised training of the machine learning techniques, such as the radar backbone neural network 106 and the further neural networks 110, 112, 114, 116, may be used to overcome a necessity of extensively label data on the one hand and let the further neural networks 110, 112, 114, 116 learn on its own which structures may be best for detecting keypoints 140 on the other hand. Additionally, the unsupervised setup may learn abstract descriptor features or descriptor vectors for reidentification of the keypoints 140.

The further neural network 112 may be used to determine a repeatability score 120 based on the feature representation 108. In particular, a sigmoid function 122 may be used to determine the repeatability score 120 from an output of the further neural network 112. The repeatability score 120 may indicate how likely it is that a keypoint 140 can be detected in a following frame.

The repeatability score 120 may be enforced to really indicate a repeatable keypoint 140 in consecutive frames by matching a keypoint position 130 of the at least one keypoint 140 in a cell of a current frame to its matching counterpart in previous frames, i.e. to a keypoint position 130 of the at least one keypoint 140 in a corresponding cell of a previous frame or a plurality of previous frames. A known ego motion of the vehicle may be used for the matching. The ego motion of the vehicle may be added to the keypoint position 130 of the keypoint 140 in a cell of the previous frame to match the keypoint position 130 of the keypoint 140 in a cell of the previous frame to the keypoint position 130 of the keypoint 140 in a cell of the current frame. The matching may further include enforcing the keypoint positions 130 to either match, thus, the repeatable score 120 is high, for example one, and the at least one keypoint 140 is a repeatable keypoint, or the repeatability score 120 is zero, therefore the keypoints does not match and the at least one keypoint 140 is a non-repeatable keypoint.

Trivial solutions, i.e. repeatability scores being zero everywhere, may be avoided by side losses like a loss function maximizing a distance between the maximum and minimum repeatability score of the grid. Maximizing the distance between the maximum repeatability score and the minimum repeatability score of the grid may be performed (in other words: carried out) during the training phase of the neural network 112 to teach the neural network 112 to generate a high repeatability score 120, for example a repeatability score 120 of 1, on real or true keypoints 140 and a low repeatability score 120, for example a repeatability score 120 of 0, everywhere else in the grid.

The repeatability score 120 may be a value of 0, 1 or a value between 0 and 1. The maximum repeatability score may be the repeatability score 120 having the highest value of all repeatability scores 120. Thus, the maximum repeatability score may be assigned to the keypoint 140 that is most likely to be determined in another frame at another point of time. On the other hand, the minimum repeatability score may be the repeatability score 120 having the lowest value of all repeatability scores 120. Thus, the minimum repeatability score may be assigned to the keypoint 140 that is least likely to be determined in another frame at another point of time.

The further neural network 114 may be used to determine a descriptiveness score 124 based on the feature representation 108. In particular, a sigmoid function 126 may be used to determine the descriptiveness score 124 from an output of the further neural network 114. The descriptiveness score 124 may specify a quality information about a descriptiveness of a descriptor vector, for example, the descriptiveness score 124 may indicate how descriptive the learned descriptor feature vector is.

The further neural network 116 may be used to determine descriptor features 126 based on the feature representation 108. The descriptor features 126 may be trained during the training phase of the further neural network 116 in that the descriptor features 126 (in other words: descriptors) for same keypoints 140 may be similar over time whereas the descriptor features 126 for different keypoints 140 may be different over time. A measure of similarity may be the cosine similarity of the descriptor features 126. The descriptor features 126 may be used to assign the keypoints 140 detected in consecutive frames or even on completely different days. The descriptor features 126 may be learned, unique identifiers in a predefined region, for example, unique in a predefined region around the vehicle, like e.g., 100m. The predefined region around the vehicle may be represented using a grid, including a plurality of cells.

The descriptiveness score 124 and the descriptor features 128 may also be trained by the described cell matching. However, for training this part, a cosine similarity of the descriptor features 128 may be enforced to be the same for matches and different for non-matching keypoints 140. The descriptiveness score 124 may be enforced to be high for good descriptive keypoints 140 and the descriptiveness score may be enforced to be close to zero for non-descriptive keypoints 140.

Trivial solutions, i.e. descriptiveness scores 124 being zero everywhere, may be avoided by side losses like a loss function maximizing a distance between the maximum and minimum descriptiveness score 124 of the grid. Maximizing the distance between the maximum descriptiveness score and the minimum descriptiveness score of the grid may be performed (in other words: carried out) during the training phase of the neural network 116 to teach the neural network 116 to generate a high descriptiveness score 124, for example a descriptiveness score 124 of 1, on descriptive keypoints 140 and a low descriptiveness score 124, for example a descriptiveness score 124 of 0, everywhere else in the grid. Descriptive keypoints 140 may be keypoints 140 that are distinguishable from other keypoints 140.

The descriptiveness score 124 may be a value of 0, 1 or a value between 0 and 1. The maximum descriptiveness score may be the descriptiveness score 124 having the highest value of all descriptiveness scores 124. Thus, the maximum descriptiveness score may be assigned to the keypoint 140 that is most descriptive or most distinguishable from all other keypoints 140. On the other hand, the minimum descriptiveness score may be the descriptiveness score 124 having the lowest value of all descriptiveness scores 124. Thus, the minimum descriptiveness score may be assigned to the keypoint 140 that is least descriptive or least distinguishable from all other keypoints 140.

Finally, the at least one keypoint 140 may be detected or determined based on the repeatability score 120 and the descriptiveness score 124. Therefore, the at least one keypoint 140 may be determined from a plurality of detected keypoints 140. The at least one keypoint may have a high repeatability score 120, thus, a probability of detecting that keypoint 140 in a following frame is high. On the other hand, the at least one keypoint 140 may have a high descriptiveness score 124, thus, the at least one keypoint 140 may be descriptive to other keypoints 140, i.e. the at least one keypoint 140 is distinguishable from other keypoints 140.

The further neural network 110 may be used to determine a keypoint position 130 based on the feature representation 108. In particular, a hyperbolic tangent function 132 may be used to determine the keypoint position 130 from an output of the further neural network 110. Generally, the keypoint position 130 may be estimated within a cell of the grid representing the region around the vehicle. For example, it may be determined in which cell of the grid the keypoint is located. Additionally, a subbin regression offset may be determined. The subbin regression offset may be trained during the training phase of the neural network 110 for training the repeatability score 120, requiring keypoints 140 be detected in different frames at a same global position. The keypoint position 130 may be refined using a direct offset regression method to not just determine the keypoint positions 130 with the accuracy of the 2D grid, but also be able to detect keypoint positions 130 with theoretically arbitrary resolution. Therefore, a position of a grid cell center of the cell that includes a keypoint 140 may be added with the subbin regression offset. The direct offset regression may be performed (in other words: carried out) using a direct subbin offset regressor to determine the subbin offset position of the keypoint 140. Using a direct offset regressor may produce just one stable keypoint position 130 and may not be affected by softmax temperatures by design. Thus, the neural network 110 for determining the keypoint position 130 may be trained in a stable way.

A similar approach for determining a keypoint position 130 may be to estimate a score on the map, patch the map and ran a softmax over the patches to determine one keypoint position 130 per patch. However, this softmax based approach may have the downsides of just approximating a single estimated keypoint position. Dependent on the softmax temperature, either the learning may get unstable (high temperature) or the softmax may tend to average several positions (low temperature).

The at least one determined keypoint 140 may be used in a SLAM system to estimate an ego position of the vehicle and to refine the keypoint's position 130 at the same time. Therefore, a non-linear equation system modeling a relation between the ego position of the vehicle in a global world coordinate system and the keypoint positions 130 in a local vehicle coordinate system (VCS) may be used.

First, the at least one detected keypoint 140 at a present point of time may be transformed from a local vehicle coordinate system to a global world coordinate system. The present point of time may specify a time at which the at least one keypoint 140 is detected. In particular, a determined position of the at least one detected keypoint 140 at the present point of time may be transformed from the local vehicle coordinate system to the global world coordinate system using data of a GPS sensor. The data of the GPS sensor may be used to determine a position of the vehicle in the global world coordinate system. The position of the vehicle in the global world coordinate system may be a rough position based on the data of the GPS sensor. The rough position of the vehicle based on the GPS data may be accurate to within a few meters, for example up to 7 meters. The position of the vehicle may also include an orientation of the vehicle in the global world coordinate system.

Based on the GPS data of the GPS sensor, a section of a global map may be determined. The section of the global map may include the position of the vehicle in the global world coordinate system. The global map may be stored in a database. Thus, the determined section of the global map may be acquired from the database for further processing.

The at least one transformed keypoint may be stored in the global map and at least one refined keypoint at the present point of time may be determined based on the at least one transformed keypoint at the present point of time and at least one stored keypoint at a previous point of time. The previous point of time may be immediately before the present point of time (in other words: no further point of time is between the previous point of time and the present point of time). It will be understood that a discrete sequence of points of time may be used, for example equidistant points of time, for example a point of time every pre-determined amount of seconds, for example every second, or every 1/10 of a second (i.e. 100 ms), or the like. Alternatively, the previous point of time may be a point of time not directly before the present point of time. For example, the previous point of time may be a point of time one hour, one week, one month, or the like before the present point of time. The at least one refined keypoint at the present point of time may be stored in the global map. Thus, the stored refined keypoint may be used for further refinements of the keypoint 140 in a further point of time, wherein the further point of time may be after the present point of time, in particular immediately after the present point of time.

Finally, an ego position of the vehicle may be determined based on the at least one refined keypoint at the present point of time and the at least one detected keypoint at the present point of time. Further, also the rough estimated position of the vehicle based on the GPS data of the GPS sensor may be refined at the present point of time based on the determined ego position of the vehicle. The refined position of the vehicle at a present point of time may be based on averaging the rough estimated position of the vehicle based on the GPS data of the GPS sensor and the determined ego position of the vehicle based on the at least one refined keypoint at the present point of time and the at least one detected keypoint at the present point of time. Alternatively, the refined position of the vehicle at the present point of time may be the rough estimated position of the vehicle based on the GPS data of the GPS sensor or the determined ego position of the vehicle, whichever fits better.

This approach may require an assignment or clustering of the detected keypoints 140 over time. In particular a refinement of the detected keypoints 140 over time may be used. The detected keypoints 140 may be refined over time based on the determined descriptor features 128 from the neural network 116 and match the descriptor features 128 based on their cosine similarity as described above.

Another option for refining the detected keypoints 140 over time is matching the keypoints 140 over time based on the keypoints' positions 130. Therefore, a keypoint position 130 of the at least one detected keypoint 140 in a cell of a current frame may be matched to a keypoint position 130 of the at least one keypoint 140 in a corresponding cell of a previous frame or a plurality of previous frames, as described above. The keypoint position 130 of the at least one keypoint 140 in a corresponding cell of a previous frame may be transferred using a known ego motion of the vehicle, which may be potentially inaccurate, or using a motion estimation from the SLAM model of the previous steps.

The following set of equations may be used to model the relations of one refined keypoint over time with a corresponding determined keypoint 140 of a current frame to the ego position of the vehicle in that frame:

$$r_1(k, e, m) = m_{score} \cdot \left( \cos(-e_{yaw}) \cdot (k_x - e_x) - \sin(-e_{yaw}) \cdot (k_y - e_y) - m_x \right)$$

$$r_2(k, e, m) = m_{score} \cdot (\sin(-e_{yaw}) \cdot (k_x - e_x) + \cos(-e_{yaw}) \cdot (k_y - e_y) - m_y),$$

wherein k describes the keypoint position (x, y) in the global world coordinate system, e describes the ego position of the vehicle (x, y, yaw angle) in the global world coordinate system, m: describes a determined keypoint position (x, y, score) in a current frame's VCS.

The score in the above equations may be a product of the repeatability score 120 and the descriptiveness score 124. The equations above may be part of an equation system with several keypoints, ego positions and measurements and the equations may be solved to minimize the residuals $r_1$ and $r_2$ for all keypoints, ego positions and corresponding measurements.

Based on the estimated ego position of the vehicle, also an ego trajectory of the vehicle may be determined over time.

Additionally, a signal of a Global Positioning System (GPS) sensor with an accuracy of some meters may be considered. The GPS sensor may be a classical GPS sensor, for example a standard GPS sensor and not an expensive differential GPS (DGPS) sensor. The GPS sensor may estimate a rough global position of the vehicle and the descriptor features 128 of the detected keypoints 140 may be used to match keypoints over time in a local region around the vehicle.

The signal of the GPS sensor may therefore be integrated into the SLAM equation system under the condition that the movement described by the regressed ego positions of the vehicle corresponds or matches to the movement described by the GPS positions. This regularization of the GPS position may result in a much better global positional information of the vehicle than from that GPS sensor on its own.

The refined GPS position of the vehicle may afterwards be used to store the refined keypoints to the global map with global coordinates and reuse the global map to localize the vehicle globally.

Using the methods described above, several keypoints 140 may be determined at one location in a global coordinate system if the vehicle may have travelled a route several times in the past. The keypoints 140 may be merged into a single keypoint based on the keypoint positions 130 or based on the descriptor features 128 by matching and combining. Therefore, determining the refined keypoint at a present point of time may be based on averaging the descriptor features 128 of the at least one keypoint 140 at the present point of time and the descriptor features 128 of the at least one keypoint at a previous point of time. Additionally or alternatively, determining the refined keypoint at the present point of time may be based on averaging the keypoint position 130 of the at least one keypoint 140 at the present point of time and the keypoint position 130 of the at least one keypoint 140 at a previous point of time.

It may also be possible to select the keypoint 140 which fit best to all other keypoints for determining the refined keypoint at a present point of time.

Thus, a global map including the refined keypoints may be determined.

If the vehicle drives along this route again, the refined GPS position may be used to obtain a correct map section from the saved global map. Afterwards the refined keypoints of the current drive may be matched based on their descriptor features 128 to the stored keypoints one in the global map. This can be done for example using a RANSAC (random sample consensus) algorithm approach. As an output, an ego position of the vehicle may be determined in a world coordinate system.

Also, a local ego position of the vehicle may be determined, i.e. based on the detected keypoints 140, it may be possible to determine how far away the vehicle is from road boundaries, obstacles etc. If the global map is enriched with lane information during the recording drive, the global map may even be used to identify a lane position of the vehicle using the radar perception system 400 as described herein.

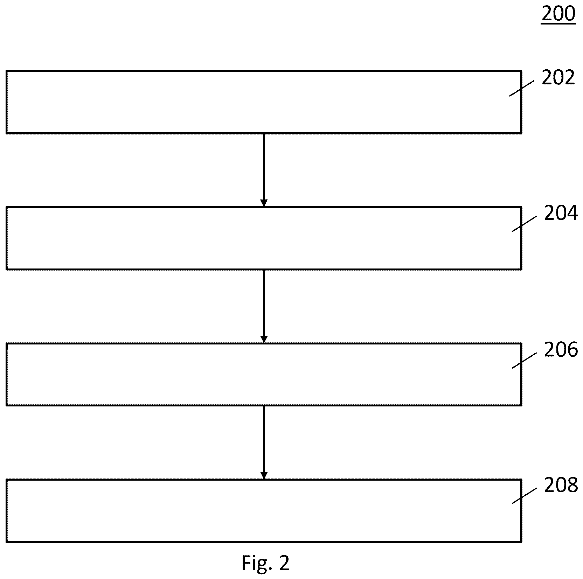

Fig. 2 shows a flow diagram 200 illustrating a method for keypoint detection based on radar data according to various embodiments. At 202, radar data may be acquired from a radar sensor. At 204, a feature representation may be determined based on the radar data. At 206, a repeatability score and a descriptiveness score may be determined based on the feature representation. At 208, at least one keypoint may be detected based on the repeatability score and the descriptiveness score.

According to an embodiment, the feature representation may be determined using a neural network, in particular a Recurrent Neural Network (RNN).

According to an embodiment, the repeatability score and the descriptiveness score may each be determined using a respective further neural network.

According to an embodiment, the method may further include the following steps carried out by the computer hardware components: determining a descriptor based on the feature representation; and assigning the at least one detected keypoint based on the descriptor.

According to an embodiment, the method may further include the following step carried out by the computer hardware components: refining a keypoint position using a direct offset regression.

According to an embodiment, the method may further include the following step carried out by the computer hardware components: matching a keypoint position of the at least one keypoint in a cell of a current frame to a keypoint position of the at least one keypoint in a corresponding cell of a previous frame.

According to an embodiment, the method may further include the following step carried out by the computer hardware components: matching a cosine similarity of the descriptor of the at least one keypoint in a cell of a current frame to a cosine similarity of the descriptor of the at least one keypoint in a corresponding cell of a previous frame.

Each of the steps 202, 204, 206, 208, and the further steps described above may be performed by computer hardware components.

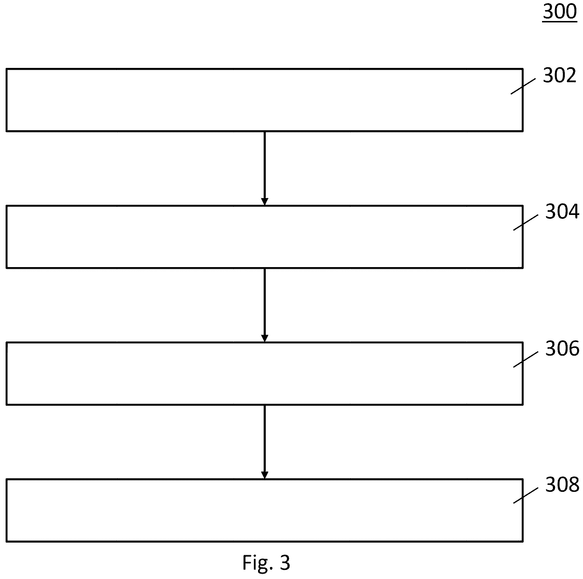

Fig. 3 shows a flow diagram 300 illustrating a method for estimating an ego position of a vehicle based on the detected keypoints according to various embodiments. At 302, the at least one detected keypoint at a present point of time may be transformed from a local vehicle coordinate system to a global world coordinate system. At 304, the at least one transformed keypoint may be stored in a global map. At 306, the at least one refined keypoint at a present point of time may be determined based on the at least one transformed keypoint at the present point of time and at least one stored keypoint at a previous point of time. At 308, an ego position of the vehicle may be determined based on the at least one refined keypoint at the present point of time and the at least one detected keypoint at the present point of time.

According to an embodiment, the method further includes the following steps carried out by computer hardware components: determining a position of the vehicle in the global world coordinate system based on GPS data of a GPS sensor; determining a section of the global map based on the GPS data of the GPS sensor, wherein the section of the global map comprises the position of the vehicle in the global world coordinate system; and refining the position of the vehicle based on the determined ego position of the vehicle.

According to an embodiment, the method further includes the following step carried out by computer hardware components: storing the at least one refined keypoint in the global map.

According to an embodiment, determining the ego position of the vehicle may further be based on a score, the score being a product of the repeatability score and the descriptiveness score.

According to an embodiment, determining the refined keypoint at a present point of time may be based on averaging a descriptor of the at least one keypoint at the present point of time and a descriptor of the at least one keypoint at a previous point of time.

According to an embodiment, determining the refined keypoint at a present point of time may be based on averaging a keypoint position of the at least one keypoint at the present point of time and a keypoint position of the at least one keypoint at a previous point of time.

Each of the steps 302, 304, 306, 308, and the further steps described above may be performed by computer hardware components.

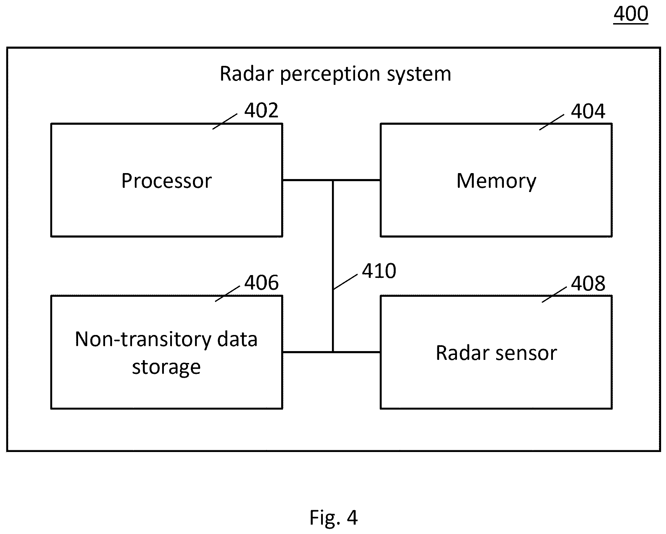

Fig. 4 shows a radar perception system 400 with a plurality of computer hardware components configured to carry out steps of a computer implemented method for keypoint detection based on radar data according to various embodiments and of a computer implemented method for estimating an ego trajectory of a vehicle based on the detected keypoints according to various embodiments. The radar perception system 400 may include a processor 402, a memory 404, and a non-transitory data storage 406. A radar sensor 408 may be provided as part of the radar perception system 400 (like illustrated in Fig. 4), or may be provided external to the radar perception system 400.

The processor 402 may carry out instructions provided in the memory 404. The non-transitory data storage 406 may store a computer program, including the instructions that may be transferred to the memory 404 and then executed by the processor 402. The radar sensor 408 may be used to determine input data, for example measurement data and/or radar sensor data that is provided to the methods described herein.

The processor 402, the memory 404, and the non-transitory data storage 406 may be coupled with each other, e.g. via an electrical connection 410, such as e.g. a cable or a computer bus or via any other suitable electrical connection to exchange electrical signals. The radar sensor 408 may be coupled to the radar perception system 400, for example via an external interface, or may be provided as parts of the radar perception system (in other words: internal to the radar perception system, for example coupled via the electrical connection 410).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the radar perception system 400.

A full system for keypoint generating, mapping and localization based on series production automotive radar sensors is described herein. The system includes at least one unsupervised trained neural network to determine keypoints, in other words: landmarks, and create description vectors or descriptor features for the keypoints. The at least one neural network is adapted to properties of radar sensors and improves and refines existing concepts. The detected keypoints may be used for mapping, localizing and refining of the global position of the vehicle using a production grade Global Positioning System (GPS) sensor. Additionally, a method to reidentify keypoints of past runs that are stored in a map is described and how to match them efficiently with detected keypoints of a present run using the classical GPS and descriptor features.

The radar perception system as described herein may separate a determination of the repeatability score and the descriptiveness score. Since radar sensor data is an input to the radar perception system, the special radar backbone neural network is used to handle the physics of the radar sensor data, e.g., having a RNN to handle the sparse nature of a single radar frame and get more information over time. At least one keypoint is determined based on the repeatability score and the descriptiveness score, but a keypoint may not be enforced in every region of a field of view of the radar sensor. Instead, a dynamic number of keypoints may be determined (in other words: accepted) in each frame and/or each region of the field of view of the radar sensor.

As described above, the whole setup may be trained unsupervised, i.e., labels for good or repeatable and descriptive (in other words: reliable or distinguishable) keypoints may not be provided. Thus, the radar perception system may determine keypoints based on series production grade radar sensor data and unsupervised trained neural networks.

Reference numeral list

| | |
|---|---|
| 100 | overview of detecting keypoints based on radar data according to various embodiments |
| 102 | radar sensor |
| 104 | radar sensor data |
| 106 | radar backbone neural network |
| 108 | feature representation |
| 110 | neural network |
| 112 | neural network |
| 114 | neural network |
| 116 | neural network |
| 120 | repeatability score |
| 122 | sigmoid function |
| 124 | descriptiveness score |
| 126 | sigmoid function |
| 128 | descriptor features |
| 130 | keypoint position |
| 132 | hyperbolic tangent function |
| | |
| 200 | flow diagram illustrating a method for keypoint detection based on radar data according to various embodiments |
| 202 | step of acquiring radar data from a radar sensor |
| 204 | step of determining a feature representation |
| 206 | step of determining a repeatability score and a descriptiveness score |
| 208 | step of detecting at least one keypoint |
| 300 | flow diagram illustrating a method for estimating an ego position of a vehicle based on the detected keypoints |
| 302 | step of transforming the at least one detected keypoint at a present point of time from a local vehicle coordinate system to a global world coordinate system |
| 304 | step of storing the at least one transformed keypoint in a global map |
| 306 | step of determining at least one refined keypoint at a present point of time |
| 308 | step of determining an ego position of the vehicle |
| | |
| 400 | radar perception system according to various embodiments |
| 402 | processor |
| 404 | memory |
| 406 | non-transitory data storage |
| 408 | radar sensor |
| 410 | connection |

**Claims**

1. Computer implemented method (200) for keypoint detection based on radar sensor data (104), the method comprising the following steps carried out by computer hardware components:

   acquiring (202) radar sensor data (104) from a radar sensor (102);
   determining (204) a feature representation (108) based on the radar sensor data (104);

determining (206) a repeatability score (120) and a descriptiveness score (124) based on the feature representation (108); and
detecting (208) at least one keypoint (140) based on the repeatability score (120) and the descriptiveness score (124).

2. The method (200) of claim 1,
wherein the feature representation (108) is determined using a neural network (106), in particular a Recurrent Neural Network, RNN; and wherein the repeatability score (120) and the descriptiveness score (120) are each determined using a respective further neural network (112, 114).

3. The method (200) of at least one of claims 1 or 2, further comprising the following steps carried out by the computer hardware components:

determining descriptor features (128) based on the feature
representation (108); and
assigning the at least one detected keypoint (140) based on the descriptor features (128).

4. The method (200) of at least one of claims 1 to 3, further comprising the following step carried out by the computer hardware components:
refining a keypoint position (130) using a direct offset regression.

5. The method (200) of at least one of claims 1 to 4, further comprising the following step carried out by the computer hardware components:
matching a keypoint position (130) of the at least one keypoint (140) in a cell of a current frame to a keypoint position (130) of the at least one keypoint (140) in a corresponding cell of a previous frame.

6. The method (200) of at least one of claims 1 to 5, further comprising the following step carried out by the computer hardware components:
matching a cosine similarity of the descriptor features (124) of the at least one keypoint (140) in a cell of a current frame to a cosine similarity of the descriptor features (124) of the at least one keypoint (140) in a corresponding cell of a previous frame.

7. Computer implemented method (300) for estimating an ego position of a vehicle based on the detected keypoints according to the method of at least one of claims 1 to 6, the method comprising the following steps carried out by computer hardware components:

transforming (302) the at least one detected keypoint (140) at a present point of time from a local vehicle coordinate system to a global world coordinate system;
storing (304) the at least one transformed keypoint in a global map;
determining (306) at least one refined keypoint at a present point of time based on the at least one transformed keypoint at the present point of time and the at least one stored keypoint at a previous point of time; and
determining (308) an ego position of the vehicle based on the at least one refined keypoint at the present point of time and the at least one detected keypoint (140) at the present point of time.

8. The method (300) of claim 7, the method comprising the following steps carried out by computer hardware components:

determining a position of the vehicle in the global world coordinate system based on GPS data of a GPS sensor;
determining a section of the global map based on the GPS data of the GPS sensor, wherein the section of the global map comprises the position of the vehicle in the global world coordinate system; and
refining the position of the vehicle based on the determined ego position of the vehicle.

9. The method (300) of at least one of claims 7 or 8, the method comprising the following step carried out by computer hardware components:
storing the at least one refined keypoint in the global map.

10. The method (300) of at least one of claims 7 to 9,
wherein determining the ego position of the vehicle is further based on a score, the score being a product of the repeatability score (120) and the descriptiveness score (124).

11. The method (300) of at least on of claims 7 to 10,
wherein determining the refined keypoint at the present point of time is based on averaging a descriptor feature (128) of the at least one keypoint at the present point of time and a descriptor feature (128) of the at least one keypoint at the previous point of time.

12. The method (300) of at least on of claims 7 to 10,
wherein determining the refined keypoint at a present point of time is based on averaging a keypoint position (130) of the at least one keypoint (140) at the present point of time and a keypoint position (130) of the at least one keypoint (140) at a previous point of time.

13. Radar perception system (400), the radar perception system (400) comprising a plurality of computer hardware components configured to carry out steps of the computer implemented method of at least one of claims 1 to 12.

14. Vehicle, comprising the radar perception system (400) of claim 13 and the radar sensor (408), wherein the at least one keypoint (140) is detected based on an output of the radar sensor (408).

15. Non-transitory computer readable medium (406) comprising instructions which, when executed by a computer, cause the computer to carry out the computer implemented method of at least one of claims 1 to 12.

100

110    132    130

102    106    112    122    120    140

104

108    114    126    124

116    128

Fig. 1

Fig. 2

300

302

304

306

308

Fig. 3

400

## Radar perception system

| 402 | | 404 |
|-----|---|------|

| Processor | Memory |
|-----------|--------|

410

| 406 | | 408 |
|-----|---|------|

| Non-transitory data storage | Radar sensor |
|------------------------------|--------------|

Fig. 4

## EUROPEAN SEARCH REPORT

Application Number

EP 24 20 3520

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAN BARNES ET AL: "Under the Radar: Learning to Predict Robust Keypoints for Odometry Estimation and Metric Localisation in Radar", ARXIV.ORG, CORNELL UNIVERSITY LIBRARY, 201 OLIN LIBRARY CORNELL UNIVERSITY ITHACA, NY 14853, 29 January 2020 (2020-01-29), XP081599475, * abstract * * figures 1, 2, 5, 7 * * Algorithm 1, 2 * * page 1, column 1, paragraph 1 * * page 2, column 1, paragraph 4 - page 3, column 1, paragraph 4 * * page 3, column 1, paragraph 6 - page 4, column 1, paragraph 3 * * page 5, column 1, paragraph 3 - column 2, paragraph 2 * * page 6, column 1, paragraph 1 * ----- | 1-15 | INV. G06V10/44 G01S7/41 G01S13/931 G06V10/62 G06V10/75 G06V10/82 G06V20/56 G06V20/64 G06V10/46 |
| X | US 2022/197301 A1 (MOAWAD MOHAMED A [US] ET AL) 23 June 2022 (2022-06-23) * figures 2-6, 23 * * paragraph [0004] - paragraph [0005] * * paragraph [0036] - paragraph [0054] * * paragraph [0156] * ----- -/-- | 1,13,15 | **TECHNICAL FIELDS SEARCHED (IPC)** G06V G01S |

The present search report has been drawn up for all claims

| Place of search | Date of completion of the search | Examiner |
|---|---|---|
| The Hague | 24 February 2025 | Konya, Iuliu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

            

& : member of the same patent family, corresponding document

EPO FORM 1503 03.82 (P04C01)

page 1 of 4

Europäisches
Patentamt

European
Patent Office

Office européen
des brevets

# EUROPEAN SEARCH REPORT

**Application Number**

EP 24 20 3520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONG Z: "RadarSLAM: A robust simultaneous localization and mapping system for all weather conditions", THE INTERNATIONAL JOURNAL OF ROBOTICS RESEARCH, SAGE PUBLICATIONS, SAGE, vol. 41, no. 5, 24 April 2022 (2022-04-24), pages 519-542, XP009553980, ISSN: 0278-3649, DOI: 10.1177/02783649221080483 <br> * abstract * <br> * figures 1, 2, 4 * <br> * page 522, column 2, paragraph 2 - page 535, column 1, paragraph 2 * <br> ----- | 1,13,15 | |
| X | FABIO WEISHAUPT ET AL: "Landmark-based Vehicle Self-Localization Using Automotive Polarimetric Radars", ARXIV.ORG, CORNELL UNIVERSITY LIBRARY, 201 OLIN LIBRARY CORNELL UNIVERSITY ITHACA, NY 14853, 11 August 2024 (2024-08-11), XP091849471, DOI: 10.1109/TITS.2024.3397075 <br> * abstract * <br> * figures 1, 2, 5, 9 * <br> * page 5, column 1, paragraph 1 - page 12, column 2, paragraph 1 * <br> ----- | 1,13,15 | |
| | | | TECHNICAL FIELDS SEARCHED (IPC) |

-/--

The present search report has been drawn up for all claims

| Place of search | Date of completion of the search | Examiner |
|---|---|---|
| The Hague | 24 February 2025 | Konya, Iuliu |

Europäisches
Patentamt

European
Patent Office

Office européen
des brevets

## EUROPEAN SEARCH REPORT

**Application Number**

EP 24 20 3520

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG B. ET AL: "4D RADAR/IMU/GNSS INTEGRATED POSITIONING AND MAPPING FOR LARGE-SCALE ENVIRONMENTS", ISPRS - INTERNATIONAL ARCHIVES OF THE PHOTOGRAMMETRY, REMOTE SENSING AND SPATIAL INFORMATION SCIENCES, vol. XLVIII-1/W2-2023, 13 December 2023 (2023-12-13), pages 1223-1228, XP093253171, ISSN: 2194-9034, DOI: 10.5194/isprs-archives-XLVIII-1-W2-2023-1223-2023 Retrieved from the Internet: URL:https://isprs-archives.copernicus.org/articles/XLVIII-1-W2-2023/1223/2023/isprs-archives-XLVIII-1-W2-2023-1223-2023.pdf> [retrieved on 2025-02-19] * the whole document * ----- | 1-15 | |
| T | BRUNE MARVIN ET AL: "Survey of Deep Learning-Based Methods for FMCW Radar Odometry and Ego-Localization", APPLIED SCIENCES, vol. 14, no. 6, 8 March 2024 (2024-03-08), page 2267, XP093253166, ISSN: 2076-3417, DOI: 10.3390/app14062267 * the whole document * ----- | | **TECHNICAL FIELDS SEARCHED    (IPC)** |
| | -/-- | | |

The present search report has been drawn up for all claims

| Place of search | Date of completion of the search | Examiner |
|---|---|---|
| The Hague | 24 February 2025 | Konya, Iuliu |

Europäisches
Patentamt

European
Patent Office

Office européen
des brevets

# EUROPEAN SEARCH REPORT

**Application Number**

EP 24 20 3520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | HARLOW KYLE ET AL: "A New Wave in Robotics: Survey on Recent MmWave Radar Applications in Robotics", IEEE TRANSACTIONS ON ROBOTICS., vol. 40, 19 January 2024 (2024-01-19), pages 4544-4560, XP093253167, US ISSN: 1552-3098, DOI: 10.1109/TRO.2024.3463504 Retrieved from the Internet: URL:https://arxiv.org/pdf/2305.01135v3> [retrieved on 2025-02-19] * the whole document * ----- | | |
| T | VENON ARTHUR ET AL: "Millimeter Wave FMCW RADARs for Perception, Recognition and Localization in Automotive Applications: A Survey", IEEE TRANSACTIONS ON INTELLIGENT VEHICLES, IEEE, vol. 7, no. 3, 18 April 2022 (2022-04-18), pages 533-555, XP011924947, ISSN: 2379-8858, DOI: 10.1109/TIV.2022.3167733 [retrieved on 2022-04-19] * the whole document * ----- | | TECHNICAL FIELDS SEARCHED (IPC) |

The present search report has been drawn up for all claims

| Place of search | Date of completion of the search | Examiner |
|---|---|---|
| The Hague | 24 February 2025 | Konya, Iuliu |

EPO FORM 1503 03.82 (P04C01)

## ANNEX TO THE EUROPEAN SEARCH REPORT
## ON EUROPEAN PATENT APPLICATION NO.

EP 24 20 3520

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2025

| Patent document cited in search report | Publication date | Patent family member(s) | Publication date |
|---|---|---|---|
| US 2022197301 A1 | 23-06-2022 | CN 114646954 A<br>EP 4016115 A1<br>US 2022197301 A1 | 21-06-2022<br>22-06-2022<br>23-06-2022 |

EPO FORM P0459

For more details about this annex : see Official Journal of the European Patent Office, No. 12/82